Europäisches Patentamt

European Patent Office

Office européen des brevets

(11) Veröffentlichungsnummer: **0 251 044 B1**

(12) **EUROPÄISCHE PATENTSCHRIFT**

(45) Veröffentlichungstag der Patentschrift: **14.10.92**

(51) Int. Cl.5: **C08L 51/04**, C08L 55/02, C08L 9/02

(21) Anmeldenummer: **87108746.6**

(22) Anmeldetag: **19.06.87**

(54) **Thermoplastische Formmassen aus ABS und hydriertem Nitrilkautschuk.**

(30) Priorität: **02.07.86 DE 3622208**

(43) Veröffentlichungstag der Anmeldung:
**07.01.88 Patentblatt 88/01**

(45) Bekanntmachung des Hinweises auf die
Patenterteilung:
**14.10.92 Patentblatt 92/42**

(84) Benannte Vertragsstaaten:
**DE FR GB IT**

(56) Entgegenhaltungen:
**EP-A- 0 129 815**
**GB-A- 1 546 651**

**PATENT ABSTRACTS OF JAPAN, Band 10,
Nr. 226 (C-364)[2282], 7. August 1986**

(73) Patentinhaber: **BAYER AG**

**W-5090 Leverkusen 1 Bayerwerk(DE)**

(72) Erfinder: **Eichenauer, Herbert, Dr.
Goethestrasse 71
W-4047 Dormagen 1(DE)**
Erfinder: **Buding, Hartmuth, Dr.
Liebermannstrasse 1
W-4047 Dormagen(DE)**
Erfinder: **Döring, Joachim, Dr.
Am Alten Broich 22
W-4018 Langenfeld(DE)**
Erfinder: **Casper, Rudolf, Prof. Dr.
St. Ingberter Strasse 3
W-5090 Leverkusen 1(DE)**
Erfinder: **Ott, Karl-Heinz, Dr.
Paul-Klee-Strasse 54
W-5090 Leverkusen 1(DE)**

**Beschreibung**

Mischungen von thermoplastischen Harzen mit Nitrilkautschuken sind bekannt (vgl. DE-AS 1 053 779); ebenso sind Mischungen aus Pfropfkautschuken, thermoplastischen Harzen und Nitrilkautschuken beschrieben (vgl. z. B. EP-A 0 129 796 und EP-A 0 129 815).

Aus diesen Mischungen hergestellte Formteile besitzen eine gute Zähigkeit; andere Eigenschaften wie Oberflächenglanz und Verarbeitbarkeit sind jedoch unzureichend.

Es wurde gefunden, daß Mischungen aus harzmodifizierten Kautschuken und hydriertem Nitrilkautschuk große Zähigkeit, insbesondere bei tiefer Temperatur, guten Oberflächenglanz und eine ausgezeichnete thermoplastische Verarbeitbarkeit besitzen.

Gegenstand der Erfindung sind thermoplastische Formmassen aus

I. 75 bis 99,5 Gew.-%, vorzugsweise 80 bis 99 Gew.-% und besonders bevorzugt 85 bis 98,5 Gew.-% (bezogen auf Formmassen) eines Polymerisates aus

   A. 0 bis 95 Gew.-%, vorzugsweise 5 bis 80 Gew.-% (bezogen auf (A + B)), eines Pfropfmischpolymerisates, hergestellt durch Pfropfpolymerisation von

      A.1 5 bis 95 Gew.-%, vorzugsweise 10 bis 80 Gew.-% (bezogen auf $A_1 + A_2$), einer Mischung aus

         A.1.1 50 bis 95 Gew.-% (bezogen auf A1.1 + A1.2) Styrol, $\alpha$-Methylstyrol, kernsubstituiertem Styrol, Methylmethacrylat oder Mischungen daraus

         A.1.2 50 bis 5 Gew.-% (bezogen auf A.1.1 + A.1.2) (Meth)-Acrylnitril, Methylmethacrylat, Maleinsäureanhydrid, N-substituiertem Maleinimid oder Mischungen daraus auf

      A.2 95 bis 5 Gew.-%, vorzugsweise 90 bis 20 Gew.-% (bezogen auf A.1 + A.2), eines Kautschuks mit einer Glastemperatur Tg $\leq$0°C

   und

   B. 100 bis 5 Gew.-%, vorzugsweise 95 bis 20 Gew.-% (bezogen auf A + B), eines thermoplastischen Polymerisates aus

      B.1 95 bis 50 Gew.-% (bezogen auf B.1 + B.2) Styrol, $\alpha$-Methylstyrol, kernsubstituiertem Styrol oder Methylmethacrylat oder Mischungen daraus und

      B.2 5 bis 50 Gew.-% (bezogen auf B.1 + B.2) (Meth)-Acrylnitril, Methylmethacrylat, Maleinsäureanhydrid, N-substituiertem Maleinimid oder Mischungen daraus

und

II. 25 bis 0,5 Gew.-%, vorzugsweise 20 bis 1 Gew.-% und besonders bevorzugt 15 bis 1,5 Gew.-% (bezogen auf Formmassen) eines hydrierten Nitrilkautschukes.

Für die Pfropfpolymerisate A geeignete Kautschuke sind beispielsweise Polybutadien, Butadien/Styrol-Copolymerisate mit bis zu 30 Gew.-% eines niederen Alkylesters von Acryl- oder Methacrylsäure (z.B. Methylacrylat, Ethylacrylat Butylacrylat, Methylmethacrylat und Ethylmethacrylat), Polyisopren und Polychloropren, sowie Alkylacrylatkautschuke auf der Basis von $C_1$-$C_8$-Alkylacrylaten, insbesondere Ethyl-, Butyl, Ethylhexylacrylat. Die Alkylacrylatkautschuke können gegebenenfalls bis zu 30 Gew.-% Monomere wie Vinylacetat, Acrylnitril, Styrol, Methylmethacrylat, Vinylether copolymerisiert enthalten und/oder kleinere Mengen (bis zu 5 Gew.-%) vernetzend wirkender mehrfach ethylenisch ungesättigter Monomerer. Solche sind z.B. Alkylendioldi(meth)-acrylate, Polyesterdi-(meth)acrylat, Divinylbenzol, Trivinylbenzol, Triallylcyanurat, Allyl-(meth)acrylat, Butadien, Isopren. Alkylacrylat-Kautschuke sind bekannt. Geeignete Alkylacrylatkautschuke sind auch solche, die einen Kern aus vernetztem Dienkautschuk (z.B. aus einem oder mehreren konjugierten Dienen, wie Polybutadien, oder ein Copolymerisat eines konjugierten Diens mit einem ethylenisch ungesättigten Monomer, wie Styrol und/oder Acrylnitril) mit einem Mantel aus einem der oben beschriebenen Alkylacrylatkautschuke enthalten.

Die Pfropfmischpolymerisate (A) enthalten 5 bis 95 Gew.-%, insbesonders 20 bis 90 Gew.-% Kautschuk und 95 bis 5 Gew.-%, insbesondere 90 bis 20 Gew.-% pfropfcopolymerisierte Monomere. Die Kautschuke liegen in diesen Pfropfmischpolymerisaten in Form wenigstens partiell vernetzter Teilchen eines mittleren Teilchendurchmessers ($d_{50}$) von 0,05 bis 5 $\mu$m, insbesondere von 0,1 bis 1 $\mu$m vor. Diese Pfropfmischpolymerisate können durch radikalische Copolymerisation von Styrol, $\alpha$-Methylstyrol, kersubstituiertem Styrol, (Meth)Acrylnitril, Methylmethacrylat, Maleinsäureanhydrid, N-substituiertem Maleinimid in Gegenwart der Kautschuke hergestellt werden. Herstellungsverfahren für solche Pfropfmischpolymerisate sind die Emulsions-, Lösungs-, Masse-oder Suspensionspolymerisation.

Die Copolymerisate (B) können aus den Pfropfmonomeren für (A) oder ähnlichen Monomeren aufgebaut sein. Es handelt sich bevorzugt um Copolymerisate aus 95 bis 50 Gew.-% Styrol, $\alpha$-Methylstyrol, Methylmethacrylat oder Mischungen daraus mit 5 bis 50 Gew.-% Acrylnitril, Methacrylnitril, Methylmethacrylat, Maleinsäureanhydrid oder Mischungen daraus. Solche Copolymere entstehen auch bei der Pfropfmischpolymerisation als Nebenprodukte. Es ist üblich, neben den im Pfropfpolymerisat enthaltenen Copolymeren noch getrennt hergestellte Copolymere zuzumischen. Diese müssen nicht mit den in den Pfropfpolymeren vorliegenden ungepfropften Copolymeranteilen chemisch identisch sein.

Geeignete getrennt hergestellte Copolymere sind harzartig, thermoplastisch und kautschukfrei; es sind insbesondere Copolymere aus Styrol und/oder α-Methylstyrol mit Acrylnitril, gegebenenfalls in Mischung mit Methylmethacrylat.

Besonders bevorzugte Copolymerisate bestehen aus 20 bis 40 Gew.-% Acrylnitril - und 80 bis 60 Gew.-% Styrol - oder α-Methylstyrol-Einheiten. Solche Copolymerisate sind bekannt und lassen sich insbesondere durch radikalische Polymerisation, insbesondere durch Emulsions-, Suspensions-, Lösungs-oder Massepolymerisation herstellen. Die Copolymerisate besitzen vorzugsweise Molekulargewichte von 15 000 bis $2 \cdot 10^5$.

Bevorzugte hydrierte Nitrilkautschuke (II) im Sinne der Erfindung sind Produkte, die durch Hydrieren statistischer Copolymerisate aus 90 bis 45 Gew.-%, bevorzugt 85 bis 50 Gew.-%, insbesondere 82 bis 52 Gew.-% zumindest einem konjugierten Dien, 10 bis 55 Gew.-%, bevorzugt 15 bis 50 Gew.-%, insbesondere 18 bis 48 Gew.-% zumindest einem ungesättigten Nitril und 0 bis 10 Gew.-%, bevorzugt 0 bis 8 Gew.-% zumindest einem weiteren mit konjugierten Dienen und ungesättigten Nitrilen copolymerisierbaren Monomeren, erhalten wurden.

Als konjugierte Diene kommen z.B. Butadien-1,3, 2-Methylbutadien-1,3, 2,3-Dimethylbutadien-1,3 und Pentadien-1,3, als ungesättigte Nitrile Acrylnitril und Methacrylnitril in Frage.

Als weitere Monomeren kommen Vinylaromaten, (Meth)Acrylsäureester mit 1 bis 12 Kohlenstoffatomen in der Alkoholkomponente, α,β- ungesättigte Mono- oder Dicarbonsäuren in Betracht.

Als beispielhaft sind zu nennen: für die Vinylaromaten Styrol, substituierte Styrole wie o-, m-, p-Methylstyrol, Ethylstyrol, ferner Vinylnaphthalin, Vinylpyridin, für die (Meth)Acrylsäureester Methyl(meth)-acrylat, Ethyl(meth)acrylat, n-Butyl(meth)acrylat, 2-Ethylhexyl(meth)acrylat, 2-Hydroxypropyl(meth)acrylat, für die ungesättigen Carbonsäuren α,β-ungesättigte Monocarbonsäuren mit 3 bis 5 Kohlenstoffatomen, wie Acrylsäure-, Methacrylsäure-und Crotonsäure sowie α,β-ungesättigte Dicarbonsäuren mit 4 bis 5 Kohlenstoffatomen, wie Malein-, Fumar-, Citracon- und Itaconsäure, ferner die Halbester der α,β-ungesättigten Dicarbonsäuren wie Maleinsäure-n-dodecylhalbester oder Fumarsäure-n-butylhalbester.

Als andere copolymerisierbare Verbindungen kommen in Betracht: Vinylchlorid, Vinylidenchlorid, N-Methylolacrylamid, Vinylalkylether mit 1 bis 4 Kohlenstoffatomen in der Alkylgruppe, vinylester von Carbonsäuren mit 1 bis 18 Kohlenstoffatomen, wie Vinylacetat oder Vinylstearat.

Spezielle Beispiele für die zu hydrierenden Copolymerisate umfassen ein Acrylnitril-Isopren-Copolymerisat, ein Acrylnitril-Isopren-Butadien-Terpolymerisat, ein Acrylnitril-Isopren-n-Butylacrylat-Terpolymerisat, ein Acrylnitril-Butadien-Methylacrylat-Terpolymerisat, ein Acrylnitril-Budadien-n-Butylacrylat-Terpolymerisat, ein Acrylnitril-Butadien-2-Hydroxypropylmethacrylat-Terpolymerisat und ein Acrylnitril-Butadien-Methacrylsäure-Terpolymerisat. Ein Acrylnitril-Butadien-Copolymerisat ist besonders bevorzugt.

Die Herstellung hydrierter Nitrilkautschuke unter Erhalt der Nitrilgruppen ist bekannt.

Der Hydriergrad der Polymeren (II) (Prozentsatz der hydrierten C-C-Doppelbindungen bezogen auf die Gesamtzahl der ursprünglich im Polymer vorhandenen C-C-Doppelbindungen) wird IR- oder NMR- spektroskopisch bestimmt und beträgt wenigstens 80 %, vorzugsweise wenigstens 90 %, insbesondere wenigstens 95 %.

Die hydrierten Polymeren (II) sind gelfrei und in Ketonen, wie Aceton oder Butanon, in Ethern, wie Tetrahydrofuran oder Dioxan oder in chlorierten Kohlenwasserstoffen, wie Dichlormethan oder Chlorbenzol, löslich.

Die Formmassen der vorliegenden Erfindung können durch Abmischung der einzelnen Komponenten auf üblichen Mischaggregaten wie Walzenstühlen, Mischextrudern oder Innenknetern hergestellt werden. Beim Vermischen oder an anderen Stellen der Aufarbeitung, Weiterverarbeitung und Endformung können der Formmasse erforderliche bzw. für das Einsatzgebiet zweckmäßige Additive zugesetzt werden, z. B. Antioxidantien, Antistatika, Gleitmittel, Flammschutzmittel, Füll- und Verstärkerstoffe, Farbmittel.

Die Formmassen können auf üblichen Verarbeitungsmaschinen thermoplastisch verformt werden, z. B. durch Spritzguß, Plattenextrusion mit anschließender Warmverformung oder Extrusion (für Rohre und Profile). Insbesondere können Formkörper durch Spritzguß hergestellt werden. Beispiele für herstellbare Formkörper sind Gehäuseteile jeder Art (z. B. für Haushaltsgeräte wie Kaffeemaschinen oder Mixer), Abdeckplatten für den Bausektor oder Teile für den Kfz-Sektor.

Teilchengröße bedeutet immer mittlerer Teilchendurchmesser $d_{50}$, ermittelt durch Ultrazentrifugenmessung nach W. Scholtan, H. Lange: Kolloid-Z. u.Z. Polymere 250, S. 782 - 796 (1972).

Beispiele

Eingesetzte Polymerisate:

A.

Pfropfpolymerisat von 50 Gew.-% eines Styrol-Acrylnitril-Gemisches (im Gew.-Verhälnis von 72 : 28) auf 50 Gew.-% teilchenförmiges Polybutadien mit einer mittleren Teilchengröße ($d_{50}$) von 0,4 $\mu$m, erhalten durch Emulsionspolymerisation.

B.

Styrol-Acrylnitril-Copolymerisat mit einem Styrol : Acrylnitril-Gew.-Verhältnis von 70 : 30 und einer Grenzviskosität von [$\eta$] = 0,72 dl/g (gemessen in Dimethylformamid bei 20°C).

II.

Hydrierter Nitrilkautschuk, erhalten nach der Vorschrift in DE-OS 3 329 974, Beispiel 1. Zur Hydrierung wurde ein statistisches Acrylnitril/Butadien-Copolymer mit 34,9 Gew.-% Acrylnitril und einer Mooney-Viskosität ML 1 + 4/100°C = 29 eingesetzt. Der Hydrierungsgrad betrug 99,7 % (infrarotspektroskopisch bestimmt).

V.

Statistisches Acrylnitril/Butadien-Copolymer mit einem Acrylnitrilgehalt von 34,9 Gew.-% und einer Mooney-Viskosität ML + 4/100°C = 29 als Vergleichssubstanz.

Die Herstellung der erfindungsgemäßen Formmassen bzw. der Vergleichsmaterilien erfolgt nach Zusatz von 2 Gew.-Tl. Pentaerythrittetrastearat und 0,15 Gew.-Tl. eines Silikonöles (jeweils pro 100 Gew.-Tl. Polymer) durch Schmelzcompoundierung in einem Innenkneter.

Anschließend wurden die Formmassen zu Normkleinstäben und einer Platte (zur Oberflächenbeurteilung) verspritzt. Die Kerbschlagzähigkeit wurde bei Raumtemperatur ($a_k$RT) und bei -40°C ($a_k$-40°C) nach DIN 53 453 (Einheit: kJ/m$^2$), die Kugeldruckhärte ($H_c$) nach DIN 53 456 (Einheit: N/mm$^2$), die Wärmeformbeständigkeit (Vicat B) nach DIN 53 460 (Einheit: °C) und die Fließfähigkeit durch Messung des Volumen-Fließindex MVI nach DIN53 735 U (Einheit: cm$^3$/10 min) bestimmt. Die Glanzmessung erfolgte nach DIN 67 530 an einer ebenen Platte bei einem Reflexionswinkel von 60°C (Reflektometerwert) mit Hilfe des Mehrwinkel-Reflektometers "Multi-Gloss" der Firma Byk-Mallinckrodt.

Die Zusammensetzungen der Formmassen sowie die Prüfdaten sind in Tabelle 1 zusammengestellt.

Patentansprüche

1. Thermoplastische Formmassen, bestehend aus
   I. 75 bis 99,5 Gew.-% eines Polymerisates aus

EP 0 251 044 B1

**T a b e l l e 1:** Zusammensetzungen und Prüfdaten der Formmassen

| Formmasse | A (Gew.-Tl) | B (Gew.-Tl) | II (Gew.-Tl) | V (Gew.-Tl.) | $a_k$-RT | $a_k$-40 | $H_c$ | Vicat B | MVI-Wert | Reflekto-meter-wert |
|---|---|---|---|---|---|---|---|---|---|---|
| 1 | 40 | 55 | 5 | - | 19,4 | 15,7 | 55 | 86 | 3,9 | 63 |
| 2 (Vergleich) | 40 | 55 | - | 5 | 19,2 | 15,2 | 56 | 87 | 1,1 | 52 |
| 3 | 30 | 60 | 10 | - | 24,7 | 20,6 | 45 | 75 | 2,7 | 71 |
| 4 (Vergleich) | 30 | 60 | - | 10 | 24,9 | 18,6 | 48 | 73 | 0,5 | 46 |

A. 0 bis 95 Gew.-% eines Pfropfmischpolymerisates, hergestellt durch Pfropfpolymerisation von

A.1 5 bis 95 Gew.-% einer Mischung aus

A.1.1 50 bis 95 Gew.-% Styrol, $\alpha$-Methylstyrol, kernsubstituiertem Styrol, Methylmethacrylat oder Mischungen daraus und

A.1.2 50 bis 5 Gew.-% (Meth)Acrylnitril, Methylmethacrylat, Maleinsäureanhydrid, N-substituiertem Maleinimid oder Mischungen daraus auf

A.2 95 bis 5 Gew.-% eines Kautschuks mit einer Glastemperatur Tg $\leqq$0°C.

und

B. 100 bis 5 Gew.-% eines thermoplastischen Polymerisates aus

B.1 95 bis 50 Gew.-% Styrol, $\alpha$-Methylstyrol, kernsubstituiertem Styrol, Methylmethacrylat oder Mischungen daraus und

B.2 5 bis 50 Gew.-% (Meth)Acrylnitril, Methylmethacrylat, Maleinsäureanhydrid, N-subst. Maleinimid oder Mischungen daraus

und

II. 25 bis 0,5 Gew.-% eines hydrierten Nitrilkautschuks.

**2.** Thermoplastische Formmassen, bestehend aus

I. 80 bis 99 Gew.-% eines Polymerisates aus

A. 5 bis 80 Gew.-% eines Pfropfmischpolymerisats, hergestellt durch Pfropfpolymerisation von

A.1 10 bis 80 Gew.-% einer Mischung aus

A.1.1 50 bis 95 Gew.-% Styrol, $\alpha$-Methylstyrol, kernsubstituiertem Styrol, Methylmethacrylat oder Mischungen daraus und

A.1.2 50 bis 5 Gew.-% (Meth)Acrylnitril, Methylmethacrylat, Maleinsäureanhydrid, N-substituiertem Maleinimid oder Mischungen daraus auf

A.2 90 bis 20 Gew.-% eines Kautschukes mit einer Glastemperatur Tg $\leqq$0°C.

und

B. 95 bis 20 Gew.-% eines thermoplastischen Polymerisats aus

B.1 95 bis 50 Gew.-% Styrol, $\alpha$-Methylstyrol, kernsubstituiertem Styrol, Methylmethacrylat oder Mischungen daraus und

B.2 5 bis 50 Gew.-% (Meth)Acrylnitril, Methylmethacrylat, Maleinsäureanhydrid, N-substituiertem Maleinimid oder Mischungen daraus

und

II. 20 bis 1 Gew.-% eines hydrierten Nitrilkautschuks.

**3.** Thermoplastische Formmassen gemäß Anspruch 1 mit dem durch Hydrierung statistischer Butadien/Acrylnitril-Copolymerisate erhaltenen Produkt als hydriertem Nitrilkautschuk.

**Claims**

**1.** Thermoplastic moulding compounds consisting of

I. 75 to 99.5% by weight of a polymer of

A. 0 to 95% by weight of a graft copolymer prepared by graft polymerization of

A.1 5 to 95% by weight of a mixture of

A.1.1 50 to 95% by weight styrene, $\alpha$-methyl styrene, nucleus-substituted styrene, methyl methacrylate or mixtures thereof and

A.1.2 50 to 5% by weight (meth)acrylonitrile, methyl methacrylate, maleic anhydride, N-substituted maleic imide or mixtures thereof on

A.2 95 to 5% by weight of a rubber having a glass temperature Tg of $\leq$ 0°C

and

B. 100 to 5% by weight of a thermoplastic polymer of

B.1 95 to 50% by weight styrene, $\alpha$-methyl styrene, nucleus-substituted styrene, methyl methacrylate or mixtures thereof and

B.2 5 to 50% by weight (meth)acrylonitrile, methyl methacrylate, maleic anhydride, N-subst. maleic imide or mixtures thereof

and

II. 25 to 0.5% by weight of a hydrogenated nitrile rubber.

**2.** Thermoplastic moulding compounds consisting of

I. 80 to 99% by weight of a polymer of

A. 5 to 80% by weight of a graft copolymer prepared by graft polymerisation of

A.1 10 to 80% by weight of a mixture of

A.1.1 50 to 95% by weight styrene, α-methyl styrene, nucleus-substituted styrene, methyl methacrylate or mixtures thereof and

A.1.2 50 to 5% by weight (meth)acrylonitrile, methyl methacrylate, maleic anhydride, N-substituted maleic imide or mixtures thereof on

A.2 90 to 20% by weight of a rubber having a glass temperature Tg of $\leq 0\,°C$

and

B. 95 to 20% by weight of a thermoplastic polymer of

B.1 95 to 50% by weight styrene, α-methyl styrene, nucleus-substituted styrene, methyl methacrylate or mixtures thereof and

B.2 5 to 50% by weight (meth)acrylonitrile, methyl methacrylate, maleic anhydride, N-substituted maleic imide or mixtures thereof

and

II. 20 to 1% by weight of a hydrogenated nitrile rubber.

3. Thermoplastic moulding compounds as claimed in claim 1 containing the product obtained by hydrogenation of statistical butadiene/acrylonitrile copolymers as the hydrogenated nitrile rubber.

**Revendications**

1. Matières à mouler thermoplastiques consistant en

I. 75 à 99,5% en poids d'un polymère de

A. 0 à 95% en poids d'un polymère greffé préparé par polymérisation greffée de

A.1 5 à 95% en poids d'un mélange de

A.1.1 50 à 95% en poids de styrène, d'alpha-méthylstyrène, d'un styrène substitué dans le noyau, de méthacrylate de méthyle ou leurs mélanges et

A.1.2 50 à 5% en poids de (méth)acrylonitrile, de méthacrylate de méthyle, d'anhydride maléique, d'un maélimide substitué à l'azote ou leurs mélanges sur

A.2 95 à 5% en poids d'un caoutchouc ayant une température de transition du second ordre $T_g$ inférieure ou égale à $0\,°C$

et

B. 100 à 5% en poids d'un polymère thermoplastique de

B.1 95 à 50% en poids de styrène, d'alpha-méthylstyrène, d'un styrène substitué dans le noyau, de méthacrylate de méthyle ou leurs mélanges et

B.2 5 à 50% en poids de (méth)acrylonitrile, de méthacrylate de méthyle, d'anhydride maléique, d'un maléimide substitué à l'azote ou leurs mélanges

et

II. 25 à 0,5% en poids d'un caoutchouc nitrile hydrogéné.

2. Matières à mouler thermoplastiques consistant en

I. 80 à 99% en poids d'un polymère de

A. 5 à 80% en poids d'un copolymère greffè préparé par polymérisation greffée de

A.1 10 à 80% en poids d'un mélange

A.1.1 50 à 95% en poids de styrène, d'alpha-méthylstyrène, d'un styrène substitué dans le noyau, de méthacrylate de méthyle ou leurs mélanges et

A.1.2 50 à 5% en poids de (méth)acrylonitrile, de méthacrylate de méthyle, d'anhydride maléique, d'un maléimide substitué à l'azote ou leurs mélanges sur

A.2 90 à 20% en poids d'un caoutchouc ayant une température de transition du second ordre $T_g$ inférieure ou égale $0\,°C$,

et

B. 95 à 20% en poids d'un polymère thermoplastique de

B.1 95 à 50% en poids de styrène, d'alpha-méthylstyrène, d'un styrène substitué dans le noyau, de méthacrylate de méthyle ou leurs mélanges et

B.2 5 à 50% en poids de (méth)acrylonitrile, de méthacrylate de méthyle, d'anhydride maléique, d'un maléimide substitué à l'azote ou leurs mélanges

et

II. 20 à 1% en poids d'un caoutchouc nitrile hydrogéné.

3. Matières à mouler thermoplastiques selon revendication 1, contenant en tant que caoutchouc nitrile hydrogéné le produit obtenu par hydrogénation de copolymères statistiques butadiène/ acrylonitrile.